# EUROPEAN PATENT APPLICATION

(11) **EP 2 224 660 A1**
(43) Date of publication of application: **01.09.2010**
(21) Application number: 08748642.9
(22) Date of filing: 21.05.2008
(51) Int. Cl.: H04L 29/06

(54) **A SYSTEM AND A METHOD FOR THE RESOURCE ACCESS CONTROL**

(30) Priority: 10.12.2007 CN 200710195319
(71) Applicant: ZTE Corporation, Shenzhen, Guangdong 518057 (CN)
(72) Inventor: SONG, Jun, Guangdong 518057 (CN); XU, Minghai, Guangdong 518057 (CN); ZHUANG, Bin, Guangdong 518057 (CN); QIU, Peiqian, Guangdong 518057 (CN); YOU, Jianjie, Guangdong 518057 (CN)
(74) Representative: Hatzmann, Martin
(86) International application number: PCT/CN2008/071036
(87) International publication number: WO 2009/076802

(57) **Abstract**

The present invention discloses a system and a method for resource access control. In the system, a resource access control function entity comprises path selection function means, which is configured to set a QoS policy and select a path meeting the QoS requirement for a service flow based on set QoS policy. In the present invention, by adding the path selection function means and selecting the path using the path selection function means, the x-RACF has the QoS policy based function of path selection and resource control for the service flow accessing to an access network, and thus the QoS guarantee capability of the NGN service is strengthened.

## Description

### Technical Field

The present invention relates to the communication field, and specifically, to a system and a method for resource access control based on the systematic architecture of the Resource Access Control Sub-system (RACS for short).

### Background Art

The Next Generation Network (NGN for short) is a packet network providing multiple kinds of services including the telecommunication service. In the NGN, in order to guarantee the Quality of Service (QoS for short) of a service, concepts of access control and resource control are introduced. By performing the access control and the resource control, with respect to upper layer, the details of a transmission network are shielded to a service layer to support the separation of service control and transmission functions, and with respect to lower layer, the use condition of the resources of the transmission network is sensed to ensure the correct and reasonable use of the resources of the transmission network and thus guarantee the QoS of the service. Thus, the TISPAN (Telecommunication Sand Internet Converged Services and Protocols for Advanced Networking) proposed the RACS (Resource Access Control Sub-system) to achieve the access control and the resource control for network resources.

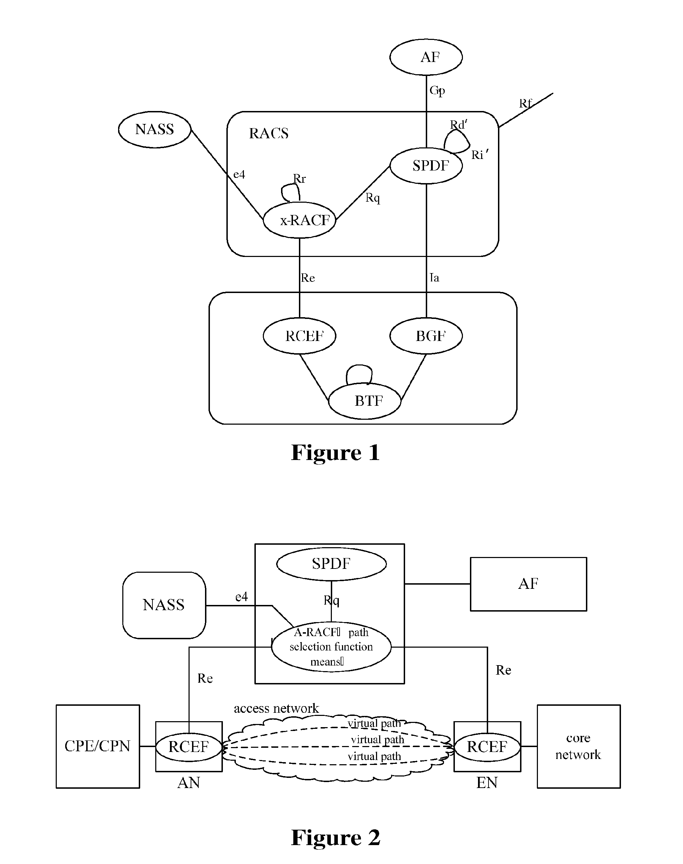

Figure 1 is a schematic view of the function and structure of the RACS. As illustrated in Fig. 1, the RACS mainly comprises the following function entities:
Application Function entity (AF for short), which is used for processing information and messages of an application layer;
Service Policy Decision Function entity (SPDF for short), which sets a policy using the service policy defined by network operators;
Resource Access Control Function entity (x-RACF), which is used for accessing to a local policy point of the access control and the resource process control;
Resource Control Enforcement Function entity (RCEF for short): RACF performs a unicast and/or multicast flow policy under the control of the X-RACF;
Boundary Gate-way Function entity (BGF for short), which is a packet-to-packet gateway; and
Basic Transport Function entity (BTF for short), which is used for achieving the transmission function.

Wherein, the x-RACF is connected to a network attachment Sub-System (NASS for short) via an e4 interface, connected to the SPDF via an Rq interface, and connected to the RCEF via an Re interface. The SPDF is connected to the BGF via an Ia interface, and connected to the AF via a Gp' interface.

The basic control principle of the RACS is described as follows: granting the request from the AF based on a policy rule, performing access control and resource control to requested resources and/or information of users, and instructing the RCEF to perform the QoS policy and resource access decision.

However, if multiple virtual channels exist between the same ingress and egress of the access network, and each virtual channel may have a different QoS guarantee ability, when the service flow has different QoS requests, which virtual channel shall be in charge of the transmission to meet the QoS request of the service is decided by the QoS policy provided by the resource access control sub-system, and thus there is a demand of how to select a virtual channel meeting the QoS request for the service flow and perform access control for the resource. Currently, the resource access control sub-system can not satisfy this function demand and can not provide the access network path function based on the policy, and thus improvement should be made therefore.

### Summary of the Invention

In consideration of the problem in the relative art that the current resource access control sub-system can not select a path (virtual channel) meeting the QoS requirement for the service flow, the present invention is provided. The present invention aims at providing a resource access control mechanism.

According to one aspect of the present invention, a resource access control system is provided. The system comprises a resource access control function entity and an RCEF and a SPDF connected to an x-RACF. Especially, the x-RACF includes a path selection function means for setting a QoS policy and selecting a path meeting the QoS requirement for the service flow based on the set QoS policy.

Wherein, the path selection function means sets a QoS policy according to at least one of: a QoS request of a service, a user type, a network policy and a network resource state.

Preferably, the path selection function means performs access control based on the selected path.

Further preferably, the path selection function means generates a path selection policy relating to the path based on the selected path and transmits the path selection policy to the RCEE

According to another aspect of the present invention, a method for resource access control is provided, which can use the above resource access control system.

The method for resource access control according to the present invention includes the following processing: in response to a resource reserving request, the path selection function means of the x-RACF sets a QoS policy, and selects a path meeting the QoS requirement for a service flow based on set QoS policy; the path selection function means generates a path selection policy relating to a path based on the selected path, and the x-RACF transmits the path selection policy to the RCEF; and the RCEF maps the service flow to the corresponding path according to the path selection policy.

Preferably, in the above processing, the path selection function means sets the QoS policy according to at least one of: the QoS request of a service, the user type, the network policy and the network resource state.

Preferably, on the one hand, before the path selection function means selects the path, the present invention further comprises the following processing: an access function entity sends a service request of a user to the SPDF; the SPDF sends the resource reserving request to the x-RACF. After the x-RACF sends the path selection policy, the present invention further comprises: the RCEF sends a path selection confirmation to the resource access control entity; the resource access control entity sends a resource access control confirmation to the SPDF; and the SPDF sends a service request confirmation to the access function entity.

Preferably, on the other hand, before the path selection function means selects a path, the present invention further comprises the following processing: a BTF forwards the received resource request to the RCEF; the RCEF sends a resource reserving request to the x-RACF. After the x-RACF sends a path selection policy, the present invention can further comprise: the RCEF sends a resource request confirmation to the BTF.

In the present invention, by adding path selection function means and performing a path selection using the path selection function means, the x-RACF has the QoS policy based function of path selection and resource control for a service flow accessing to the access network, and thus the QoS guarantee capability of the NGN service is strengthened.

Other features and advantages of the present invention will be explained in the following part of the description, and will partly become apparent from the description or are understood by carrying out the present invention. The purpose and other advantages of the present invention can be achieved and obtained by the structure especially pointed out in the description, the claims and the accompanying drawings.

### Brief Description of the Accompanying Drawings

The accompanying drawings herein are used to provide a further understanding of the present invention and constitute a part of the present application. The illustrative embodiment of the present invention and the description thereof are used to explain the present invention and shall not be construed as limitations on the same. In the accompanying drawings:
Figure 1 is a schematic view of the function structure of the RACS according to the related technology;
Figure 2 is a schematic view of the function structure of the resource access control system according to an embodiment of the present invention;
Figure 3 is a flow chart of the resource access control method according to an embodiment of the present invention;
Figure 4 is a flow chart of the signaling interaction according to embodiment 1 in the embodiments of the present invention; and
Figure 5 is a flow chart of the signaling interaction according to embodiment 2 in the embodiments of the present invention.

### Detailed Description of the Invention

As described above, in order to enable the Resource Access Control Sub-system (RACS for short) to have the QoS policy based function of path selection and resource control for the service flow accessing to the access network, the present invention adds a policy based access network path selection function entity into the RACS.

The preferable embodiments of the present invention will be described hereinafter in conjunction with the accompanying drawings. It shall be understood that the preferable embodiments of the present invention described herein are only used to illustrate and explain the present invention and shall not be construed as limitations on the same.

### System embodiment

According to the embodiment of the present invention, a system for resource access control is provided. Fig. 2 is a schematic view of the functional structure of the system for resource access control according to the embodiment of the present invention.

As illustrated in Fig. 2, the system comprises: a Resource Access Control Function entity (A-RACF for short); a Resource Control Enforcement Function entity (RCEF for short); a Service Policy Decision Function entity (SPDF for short) , which is configured to make a decision by using a service policy defined by network operators; a Network Attachment Sub-System (NASS for short), which can be understood as a user reserved information database for storing network attachment information and user QoS information. The SPDF is connected to the A-RACF via an Rq interface, and the A-RACF is connected to the NASS via an e4 interface; and the A-RACF is connected to the RCEF via an Re interface. The AN (Access Node) as shown in Fig. 2 is the first access device for a user equipment to access to an operator network, and is the start point of the access network, and the EN (Edge Node) is the end point of the access network.

Especially, as illustrated in Fig. 2, the A-RACF further comprises: path selection function means, configured to set a QoS policy and select a path (virtual channel) meeting the QoS requirement for the service flow based on the set QoS policy. Wherein, the path selection function means sets the QoS policy according to a QoS request of a service, a user type, a network policy, a network resource state, and etc.

Furthermore, the path selection function means performs access control based on the selected path.

In addition, the path selection function means generates a path selection policy relating to a path based on the selected path and transmits the path selection policy to the RCEF. Then, the RCEF maps the service flow to the corresponding (logically) virtual channel according to the received path selection policy.

### Method embodiment

According to the embodiment of the present invention, a method for resource access control is provided, and the method preferably uses the system for resource access control according to the embodiment of the present invention. It can be understood that the method can also be achieved by using other appropriate systems.

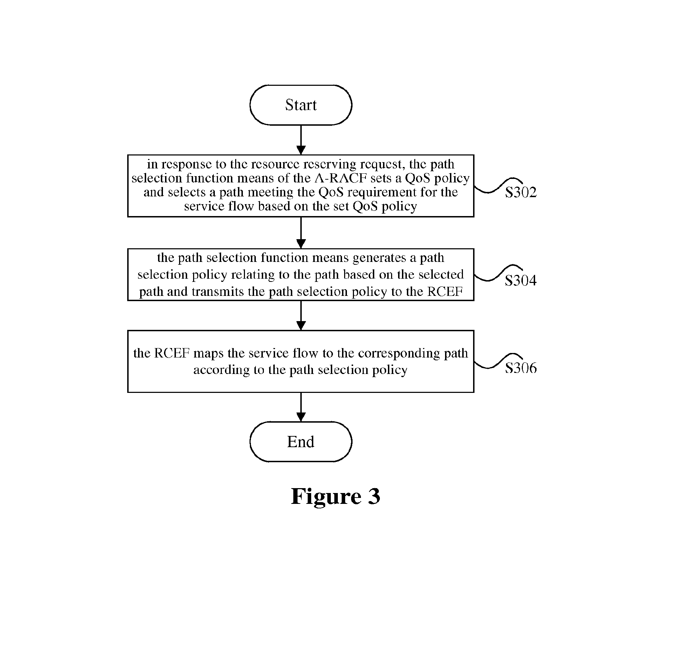

As shown in Fig. 3, the method for resource access control according to the present invention comprises the following processing:
step S302, in response to the resource reserving request, the path selection function means of the A-RACF sets a QoS policy and selects a path (virtual channel) meeting the QoS requirement for the service flow based on the set QoS policy;
step S304, the path selection function means generates a path selection policy relating to the path based on the selected path and transmits the path selection policy to the RCEF; and
step S306, the RCEF maps the service flow to the corresponding path according to the path selection policy.

Preferably, in step S304, the path selection function means sets the QoS policy according to at least one of the following: the QoS request of a service, the user type, the network policy and the network resource state.

In order to process different types of Customer premise equipment, the method can support two resource control modes: a PUSH mode and a PULL mode. In the PUSH mode, the user equipment can interact with the service equipment, and the A-RACF downwardly transmits the path selection policy to the resource control enforcement function for execution. In the PULL mode, the user equipment can only send a transmitting layer QoS signaling, and after receiving the message of the transmitting layer signaling, the A-RACF requests the path selection policy from upper layer. The service flows under the two resource reservation modes of PUSH and PULL will be described hereinafter through embodiments.

### Embodiment 1: PUSH mode

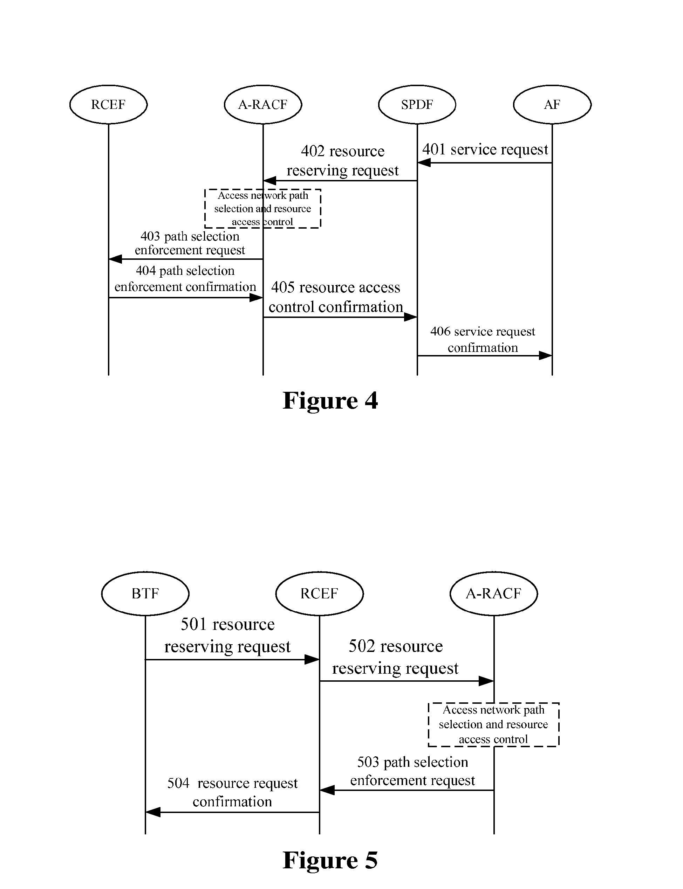

Fig. 4 shows the flow chart of performing a path selection for a service flow in the access network under the PUSH mode. As illustrated in Fig. 4, it comprises the following processing:
step S401, the AF (Access Function entity) sends the service request of a user to the SPDF;
step S402, the SPDF selects an appropriate policy based on the service and requests an appropriate A-RACF and BGF service, i.e., sends a resource reserving request to the A-RACF;
step S403, the path selection function means in the A-RACF sets the QoS policy according to the QoS request of the service, the user type , the network policy (operator configuration) and the network resource state, meanwhile, selects a path (virtual channel) meeting the QoS requirement for the service flow based on the QoS policy and performs access control based on the same, generates a path selection policy corresponding to the path, and then transmits the path selection policy down to the RCEF; and the path selection policy can be carried in a path selection enforcement request;
step S404, the RCEF maps the service flow to the corresponding (logically) channel according to the path selection policy, and sends a path selection enforcement confirmation to the A-RACF;
step S405, after receiving the confirmation, the A-RACF sends a resource access control confirmation to the SPDF; and
step S406, the SPDF sends the result (service request confirmation) to the AF.

### Embodiment 2: PULL mode

Fig. 5 shows the flow chart of performing a path selection for a service flow in the access network under the PULL mode. As shown in Fig. 5, it comprises the following processing:
step 501, the BTF receives the resource reserving request, and forwards the resource request to the RCEF;
step 502, the RCEF constructs the resource reserving request, and sends to the A-RACF;
step 503, the path selection function means in the A-RACF sets a QoS policy according to the QoS request of the service, the user type, a network policy (operator configuration) and a network resource state, meanwhile, selects a path (virtual channel) meeting the QoS requirement for the service flow based on the QoS policy and performs access control based on the same, generates a path selection policy corresponding to the path, and then transmits the path selection policy down to the RCEF; and the path selection policy can be carried in the path selection enforcement request; and
step 504, the RCEF sends a return (resource request confirmation) to the BTF.

As stated above, by the present invention, through adding the path selection function means and performing path selection using the path selection function means, the A-RACF has the function of path selection and resource control based on the QoS policy for a service flow accessing to the access network, and thus the QoS guarantee capability of the NGN service is strengthened.

The descriptions above are only preferable embodiments of the present invention, which are not used to restrict the present invention. For those skilled in the art, the present invention may have various changes and variations. Any modifications, equivalent substitutions, improvements etc. within the spirit and principle of the present invention shall all be included in the scope of protection of the present invention.

## Claims

1. A system for resource access control, comprising a Resource Access Control Function entity, x-RACF, and a Resource Control Enforcement Function entity, RCEF, and a Service Policy Decision Function entity, SPDF, connected to the x-RACF, **characterized in that** the x-RACF comprises:
path selection function means, configured to set a Quality of Service, QoS, policy, and select a path meeting QoS requirement for a service flow based on set QoS policy.

2. The system for resource access control according to Claim 1, **characterized in that** the path selection function means sets the QoS policy according to at least one of the following: a QoS request of a service, a user type, a network policy and a network resource state.

3. The system for resource access control according to Claim 1, **characterized in that** the path selection function means performs access control based on the selected path.

4. The system for resource access control according to Claim 1, **characterized in that** the path selection function means generates a path selection policy relating to the path based on the selected path, and transmits the path selection policy to the RCEF.

5. A method for resource access control using the system for resource access control according to any one of Claims 1-4, **characterized in that** the method for resource access control comprises:
in response to a resource reserving request, the path selection function means of the x-RACF setting a QoS policy and selecting a path meeting the QoS requirement for a service flow based on set QoS policy;
the path selection function means generating a path selection policy relating to the path based on the selected path, and the x-RACF transmitting the path selection policy to the RCEF; and
the RCEF mapping the service flow to a corresponding path according to the path selection policy.

6. The method for resource access control according to Claim 5, **characterized in that** the path selection function means sets the QoS policy according to at least one of the following: the QoS request of the service, the user type , the network policy and the network resource state.

7. The method for resource access control according to Claim 5 or 6, **characterized by**, before the path selection function means selects the path, further comprising:
an access function entity sending a service request of a user to the SPDF; and
the SPDF sending the resource reserving request to the x-RACF.

8. The method for resource access control according to claim 7, **characterized by**, after the x-RACF sends the path selection policy, further comprising:
the RCEF sending a path selection confirmation to the resource access control entity;
the resource access control entity sending a source access control confirmation to the SPDF; and
the SPDF sending a service request confirmation to the access function entity.

9. The method for resource access control according to claim 5 or 6, **characterized by**, before the path selection function means selects the path, further comprising:
a basic transmission function entity forwarding the received resource request to the RCEF;
and
the RCEF sending the resource reserving request to the x-RACF.

10. The method for resource access control according to claim 9, **characterized by**, after the x-RACF sends the path selection policy, further comprising:
the RCEF sending a resource request confirmation to the basic transmission function entity.
